Europäisches Patentamt

(19) European Patent Office

Office européen des brevets

(11) EP 0 794 351 A1

(12) EUROPEAN PATENT APPLICATION

(43) Date of publication:
10.09.1997 Bulletin 1997/37

(51) Int. Cl.$^6$: F16F 15/24

(21) Application number: 97103100.0

(22) Date of filing: 26.02.1997

(84) Designated Contracting States:
DE ES FR GB SE

(30) Priority: 07.03.1996 IT TO960172

(71) Applicant: FIAT AUTO S.p.A.
10135 Torino (IT)

(72) Inventor: Titolo, Andrea
10139 Torino (IT)

(74) Representative: Marchitelli, Mauro et al
c/o JACOBACCI & PERANI S.p.A.
Corso Regio Parco, 27
10152 Torino (IT)

(54) **A reciprocating volumetric machine, in particular an internal combustion engine for vehicles, with intrinsic balance of the reciprocating moving masses**

(57) A reciprocating volumetric machine in particular an internal combustion engine for vehicles comprising at least one cylinder (12) within which is slidable a piston (14) connected to a drive shaft (24) by means of a main connecting rod (18) and a crank (22). The machine includes an auxiliary connecting rod (30) fixed to and counterposed with respect to the main connecting rod (18). The auxiliary connecting rod (30) has a moment of inertia equal to the one of the main connecting rod (18) and of the parts connected to it which have reciprocating motions.

FIG. 1

EP 0 794 351 A1

## Description

The present invention relates to a reciprocating volumetric machine, in particular an internal combustion engine for vehicles, comprising at least one cylinder within which is slidable a piston connected to a drive shaft by means of a main connecting rod and a crank.

As is known, the conventional connecting rod and crank mechanism is inherently out of balance due to the number and arrangement of cylinders. Engines with one and two cylinders are out of balance as far as first and second order equi-rotational and counter-rotational forces are concerned, as well as upper orders. A three cylinder engine is out of balance as far as first and second order equi-rotational and counter-rotational torques are concerned, as well as upper orders. A four cylinder, in-line engine is unbalanced as far as second order equi-rotational and counter-rotational forces are concerned as well as upper orders. A four cylinder boxer engine (having counterposed cylinders) is unbalanced as far as second order equi-rotational and counter-rotational torques are concerned, as well as upper orders.

Sometimes, therefore, in order to balance a four cylinder in-line engine up to the second order, recourse is had to the use of two balancing shafts, one rotating in the same direction and the other counter-rotating, which rotate at twice the speed of rotation of the engine.

The object of the present invention is to provide a system which makes it possible to obtain intrinsic balancing of a reciprocating volumetric machine.

According to the present invention this object is achieved by a machine having the characteristics forming the subject of Claim 1.

The present invention proposes to replace the connecting rod cap present on conventional connecting rod and crank mechanisms with an auxiliary connecting rod coaxial with and having the same length as the main connecting rod. At the free end of the auxiliary connecting rod is disposed a mass equal to that of the piston complete with gudgeon pin, piston rings and any other rings etc, that is to say a mass substantially equal to that of the translating parts of the engine. In this way equal and opposite inertial forces are produced which cancel each other out. The counterweight present on the engine shaft must balance a greater mass which, for each cylinder, is equivalent to the sum of the masses of two complete pistons, plus two connecting rods, and possibly also the mass of the crank etc.

The arrangement according to the invention makes it possible to produce engines with individual cylinders greater than, for example 800 to 1000 cm$^3$ which makes it possible for example to produce engines with an overall capacity of 3200/4000 cm$^3$ with only four cylinders, obtaining a considerable saving.

Further characteristics and advantages of the present invention will become apparent during the course of the following detailed description given purely by way of non-limitative example, with reference to the attached drawings, in which:

Figure 1 is a transverse section of an internal combustion engine according to the present invention;
Figure 2 is a section taken on the line II-II of Figure 1; and
Figure 3 is a simplified diagram of the mechanism according to the invention which shows the compensation of the inertial forces of the system.

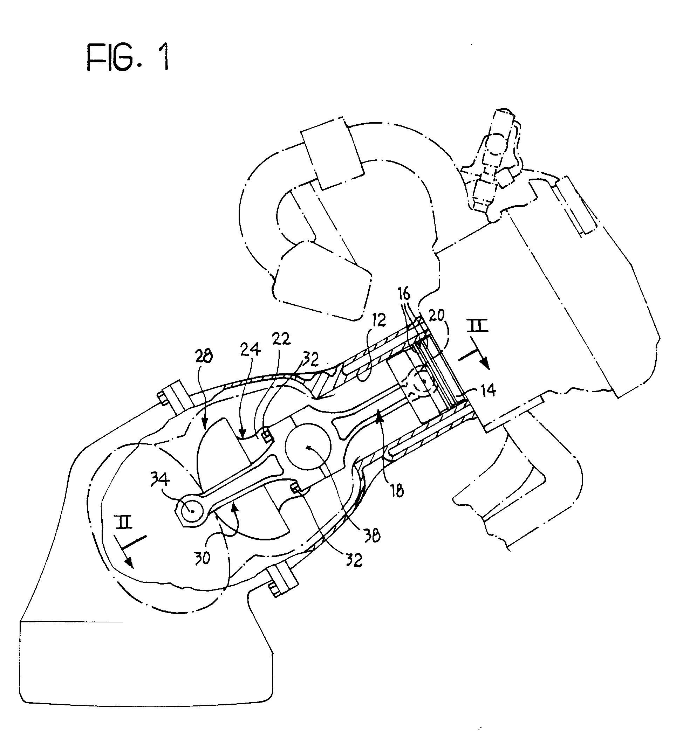

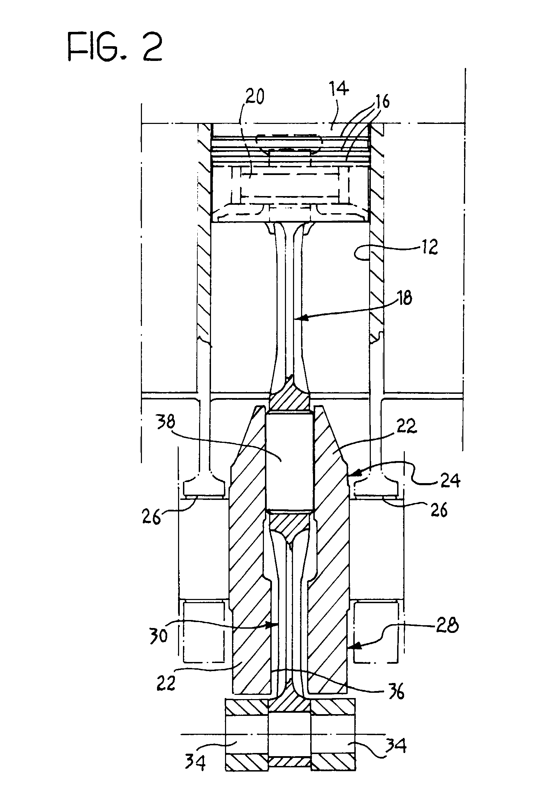

With reference to Figures 1 and 2, the reference numeral 10 indicates an internal combustion engine having several cylinders disposed in line, only one of which is visible in the drawings and is indicated 12. Within the cylinder 12 is slidable a piston 14 provided with piston rings 16. The piston 14 is connected to a main connecting rod 18 by means of a gudgeon pin 20. The main connecting rod 18 is pivoted to a crank 22 forming part of a crank shaft 24 which, in a manner known per se, is supported for rotation on the engine crank case by main bearings indicated 26 in Figure 2. The crank shaft 24 has a counterweight 28 situated in phase opposition with respect to the crank 22.

The engine according to the present invention includes an auxiliary connecting rod 30 coaxial with and counterposed with respect to the main connecting rod 28. The shape, dimensions and mass of the auxiliary connecting rod 30 are substantially the same as those of the main connecting rod 18. The auxiliary connecting rod 30 is fixed to the big end of the main connecting rod 18 by means of screws 32 and replaces the conventional connecting rod cap.

At the free end of the auxiliary connecting rod 30 there is disposed a mass 34 equal to the sum of the masses of the translating parts connected to the main connecting rod 18. More precisely, the mass 34 will be equal to the sum of the masses of the piston 14, the piston rings 16, the gudgeon pin 20 and any possible further element connected to the main connecting rod 18 and given reciprocating motion.

As can be seen in Figure 2, the auxiliary connecting rod 30 extends through an aperture 36 passing through the counterweight 28. The counterweight 28 must be dimensioned to balance the entire mass articulated to the crank pin 38. In practice the counterweight 28 will have to balance the mass in the following elements: piston 14 and parts connected to it (piston rings 16, gudgeon pin 20 etc), main connecting rod 18, auxiliary connecting rod 30 and associated balancing mass 34.

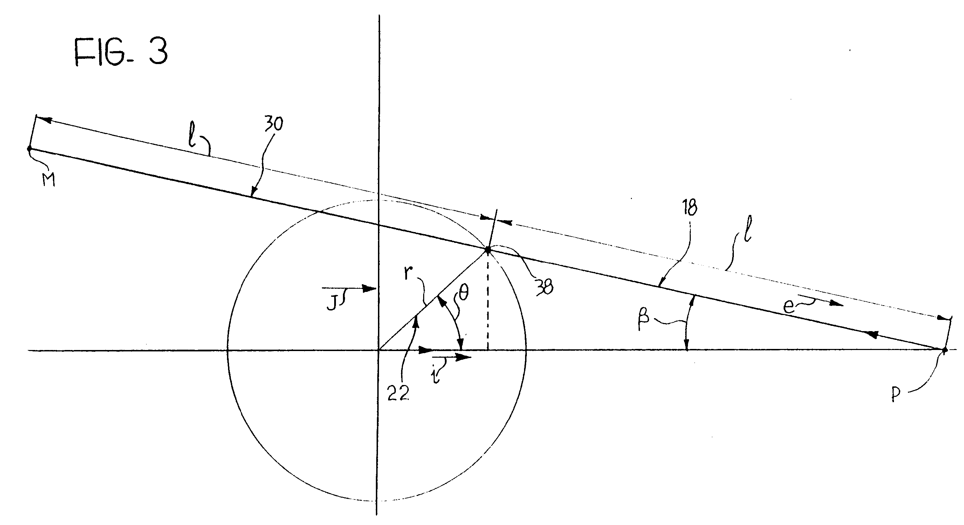

Referring to Figure 3, the system according to the invention can be schematically represented as a pair of masses P and M of equal magnitude concentrated at the ends of the main connecting rod 18 and the auxiliary connecting rod 30. In the schematic representation of Figure 3 it is supposed that the main connecting rod 18 and the auxiliary connecting rod 30 are devoid of mass with the intention that the masses of the two connecting rods are incorporated in the masses P and M. In Figure 3 they are indicated $\vec{i}$ and $\vec{j}$ orientated along the longitudinal axis of the cylinder and orthogonal to this axis. In Figure 3 there is also indicated the versor $\vec{e}$ directed along the axis of the main connecting rod 18 and the auxiliary connecting rod 30. The angles $\theta$ and $\beta$ indicate the phase of the crank 22 and the main connecting rod 18 with respect to the longitudinal axis of the cylinder.

By indicating the length of the crank 22 as r and the length of the main connecting rod 18 and that of the auxiliary connecting rod 30 as l, and utilising the vector notation, one has that the position $\vec{r}_p$ of the mass P is equal to

$$\vec{r}_p = (r\cos\theta + 1\cos\beta)\vec{i} \qquad\qquad I.$$

In the same way, the position $\vec{r}_m$ of the mass M is equal to

$$\vec{r}_m = (r\cos\theta + 1\cos\beta)\vec{i} + 21\vec{e} = (r\cos\theta + 1\cos\beta - 21\cos\beta)\vec{i} + 21\sin\beta\vec{j} \qquad\qquad II.$$

Since $1\sin\beta = r\sin\theta$ one has:

$$\vec{r}_m = (r\cos\theta - 1\cos\beta)\vec{i} + 2\,r\sin\theta\,\vec{j} \qquad\qquad III.$$

Differentiating formulae I and III twice and multiplying by the value m of the masses P and M, one has:

$$\vec{F}_p = m\vec{a}_p = m\omega^2[-r\cos\theta + \frac{d^2}{dt^2}(1\cos\beta)]\vec{e} \qquad\qquad IV.$$

$$\vec{F}_m = m\vec{a}_m = m\omega^2\{[-r\cos\theta - \frac{d^2}{dt^2}(1\cos\beta)]\vec{i} - 2\,r\sin\theta\,\vec{j}\} \qquad\qquad V.$$

where $\vec{F}_p$ is the force acting on the mass P, $\vec{a}_p$ is the acceleration of the mass P, $\vec{F}_m$ is the force acting on the mass M and $\vec{a}_m$ is the acceleration of the mass M whilst $\omega$ is the angular velocity of the crank 22.

Upon summing the formulae IV and V one obtains the expression of the overall force $\vec{F}$ which acts on the system

$$\vec{F} = \vec{F}_p + \vec{F}_m = 2\,m\omega_2(-\cos\theta\,\vec{i} - \sin\theta\,\vec{j}) \qquad\qquad VI.$$

The term $(-\cos\theta\,\vec{i} - \sin\theta\,\vec{j})$ describes the circular trajectory of the crank pin 38, for which the expression of the overall force $\vec{F}$ is equivalent to the centripetal acceleration of a mass 2m which follows the circular trajectory of the crank pin 38.

In this way it is analytically demonstrated that the system schematically shown in Figure 3 behaves as a mass in rotation situated at the crank pin 38, that is to say as a mass subjected to a centripetal acceleration due to the radius of crank r. The centrifugal reaction is balanced by the counterweight of the crank shaft.

In the schematic illustration utilised in Figure 3 and in the analytical calculation above the mass of the connecting rod has not been considered. In the real system, therefore, the kinetic energy of the connecting rod which increases and decreases as a function of position of the crank, thus remains. It can be demonstrated that the kinetic energy of the connecting rod produces a couple which tends to urge the connecting rod towards the axis of the cylinder. In a four cylinder engine the couples due to the kinetic energy variations of the connecting rods cancel each other out so that a four cylinder engine with auxiliary connecting rods is intrinsically balanced without having to have recourse to equi-rotating or counter-rotating balancing shafts. Only the reaction couple varies.

Being able to count on an intrinsically balanced geometry it is possible to produce engines having cylinders of greater individual capacity. Therefore, for the same capacity, it is possible to reduce the number of cylinders and the longitudinal dimension of the engine.

## Claims

1. A reciprocating volumetric machine, in particular an internal combustion engine for vehicles, comprising at least one cylinder (12) within which is slidable a piston (14) connected to a drive shaft (24) by means of a main connecting rod (18) and a crank (22), an auxiliary connecting rod (30) being fixed to the main connecting rod (18), the auxiliary connecting rod (30) being counterposed to the main connecting rod (18) and having a mass equal to the sum of the masses of the main connecting rod (18) and the parts (14, 16, 20) having reciprocating motion connected to it, characterised in that the auxiliary connecting rod (30) has a moment of inertia with respect to the axis of the crank which is substantially equal to the moment of inertia with respect to the axis of the crank of the main connecting rod (18) and of said parts (14, 16, 20) connected to it.

2. A machine according to Claim 1, characterised in that the auxiliary connecting rod (30) has substantially the same length of the main connecting rod (18) and carries at its free end a mass (34) substantially equal to the sum of the masses of the piston (14), the gudgeon pin (20) and the piston rings (16) of the piston (14).

3. A machine according to Claim 1, characterised by the fact that the engine shaft (24) includes, for each cylinder (12), two counterweights (28) acting to counterbalance the overall mass of the associated group comprising the main connecting rod (18) and the auxiliary connecting rod (30).

FIG. 1

# FIG. 2

FIG. 3

EP 0 794 351 A1

**European Patent Office**

## EUROPEAN SEARCH REPORT

Application Number

EP 97 10 3100

### DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | GB 1 551 600 A (THE HYMATIC CRANK ENGINEERING COMPANY) * the whole document * --- | 1 | F16F15/24 |
| A | MTZ MOTORTECHNISCHE ZEITSCHRIFT, vol. 53, no. 2, 1 February 1992, pages 60-64, XP000246221 KRUGER H: "MASSENAUSGLEICH DURCH PLEUELGEGENMASSEN" * page 61; figures 1-4 * --- | 1 | |
| A | GB 231 223 A (ELIAS DE LA ROCHE RENDELL) * the whole document * --- | 1 | |
| A | DE 41 22 198 A (VOLKSWAGEN) * abstract; figure 1 * ----- | 1 | |

TECHNICAL FIELDS
SEARCHED      (Int.Cl.6)

F16F
F02B

The present search report has been drawn up for all claims

| Place of search | Date of completion of the search | Examiner |
|---|---|---|
| THE HAGUE | 3 June 1997 | Kooijman, F |

EPO FORM 1503 03.82 (P04C01)